# FASCICULE DE BREVET EUROPEEN

(11) **EP 4 260 435 B1**
(45) Date de publication et mention de la délivrance du brevet: **07.10.2026**
(21) Numéro de dépôt: 21819984.2
(22) Date de dépôt: 03.12.2021
(51) Int. Cl.: H02K 1/20, H02K 1/27, H02K 21/24, H02K 9/197, H02K 3/24, H02K 7/00, H02K 3/18, H02K 1/14, H02K 11/25, H02K 16/00, H02K 16/04

(54) **STATOR DE MOTEUR ÉLECTRIQUE COMPORTANT UN SYSTÈME DE REFROIDISSEMENT DES BOBINES PAR HUILE**
STATOR EINES ELEKTROMOTORS MIT EINEM SYSTEM ZUR KÜHLUNG DER SPULEN DURCH ÖL
ELECTRIC MOTOR STATOR COMPRISING A SYSTEM FOR COOLING THE COILS BY OIL

(30) Priorité: 10.12.2020 FR 2013016
(43) Date de publication de la demande: 18.10.2023
(73) Titulaire: Whylot, 46100 Cambes (FR)
(72) Inventeur: MIHAILA, Vasile, 46100 Figeac (FR)
(86) Numéro de dépôt international: PCT/IB2021/061277
(87) Numéro de publication internationale: WO 2022/123408

(56) Documents cités:
- EP-A1- 3 764 526
- WO-A1-2020/147551
- CN-U- 209 001 745
- DE-A1- 102014 205 034
- FR-A1- 3 086 465
- JP-A- 2006 033 965
- US-A1- 2017 012 480
- US-B2- 10 498 199

## Description

La présente invention concerne un stator de moteur électrique équipé de bobines et comportant un système de refroidissement des bobines par huile en tant que fluide caloporteur ainsi qu'un moteur ou une génératrice électromagnétique équipé d'un tel stator.

La présente invention trouve une application avantageuse mais non limitative pour un moteur électromagnétique délivrant une forte puissance avec une vitesse de rotation du rotor élevée. Un tel moteur ou génératrice peut être utilisé par exemple comme moteur ou génératrice électromagnétique dans un véhicule automobile totalement électrique ou hybride.

Avantageusement mais non limitativement, le moteur ou la génératrice électromagnétique peut comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement du moteur pour un rendement optimal, mais également une très bonne tenue mécanique de la partie tournante, c'est-à-dire le ou les rotors, afin d'améliorer la fiabilité du système. Il est donc nécessaire de réduire les pertes pour un rendement optimal.

Ces pertes peuvent se produire dans le ou les rotors du moteur électrique ou dans le ou les stators. En ce qui concerne les rotors, les pertes par courant de Foucault dans les aimants ont été considérablement réduites, notamment en proposant des rotors sans fer ou en proposant des pôles d'aimant constitués d'une pluralité d'aimants unitaires de petite taille.

Les principales pertes sont donc maintenant les pertes par effet Joule dans les bobines des stators ainsi que les pertes magnétiques dans le fer des stators.

Les échauffements apparaissent donc majoritairement dans les stators des moteurs électriques et doivent être diminués le plus efficacement possible.

Différentes solutions existent, par exemple une circulation de fluide caloporteur dans un circuit usiné dans le carter du moteur électrique ou une circulation d'huile au niveau des têtes de bobine. Il est ainsi connu un stator comportant un système de refroidissement des bobines par huile en tant que fluide caloporteur.

De manière classique, les bobines sont disposées les unes à côté des autres en laissant un faible espacement entre deux bobines adjacentes et en délimitant ensemble des circonférences interne et externe dans le stator.

Le système de refroidissement comprend un collecteur d'entrée et un collecteur de sortie d'huile, le collecteur d'entrée étant percé d'orifices d'entrée pour envoyer de l'huile sur les bobines et le collecteur de sortie étant percé d'orifices de sortie pour récupérer l'huile.

Ceci est notamment connu du document US-A-2017/012480 qui prévoit une circulation d'huile comme fluide caloporteur entre les bobines d'un stator. Il est ainsi proposé, afin d'améliorer l'évacuation des pertes statoriques de faire baigner les bobines dans un circuit de fluide caloporteur, ces bobines étant le siège de courants entraînant des pertes par effet Joule ou des pertes magnétiques.

De ce document, il est visible que l'huile pénètre par le stator par deux entrées et fait le tour des bobines en passant, le cas échéant entre deux bobines adjacentes. Par contre, pour des bobines éloignées des deux entrées d'alimentation, c'est de l'huile ayant déjà échangé de la chaleur avec les bobines situées à l'entrée qui effectue le refroidissement des bobines éloignées, ce qui ne garantit pas un refroidissement homogène des bobines.

La circulation du fluide caloporteur qu'est l'huile peut être rendue difficile par les nombreuses pertes régulières et singulières de charge, qui augmentent la pression d'huile et donc rendent difficile l'étanchéité du circuit d'huile dans le moteur électrique.

Ainsi, un refroidissement homogène des bobines n'est pas garanti par n'importe quelle circulation d'huile, les bobines premièrement refroidies par la circulation de fluide l'étant plus que les bobines suivantes, le fluide se réchauffant et perdant ses qualités d'échange de chaleur.

Il est ainsi très difficile d'associer une circulation d'huile uniforme entre chaque tête de bobine. Quand le fluide caloporteur arrive par un trou d'injection, le fluide caloporteur doit circuler dans tout le stator, en refroidissant les bobines les unes après les autres dans un processus en série et est alors le siège de pertes régulières.

Par ailleurs, l'élévation de température est non homogène et cela diminue les capacités de refroidissement du dispositif de refroidissement à circulation de fluide caloporteur.

Le document JP-A-2006/033965 décrit un stator de moteur électrique équipé de bobines et comportant un système de refroidissement des bobines par huile en tant que fluide caloporteur, les bobines étant disposées les unes à côté des autres en laissant un espacement entre deux bobines adjacentes et en délimitant ensemble des circonférences interne et externe dans le stator.

Le système de refroidissement comprend un élément s'apparentant à un collecteur d'entrée et un élément s'apparentant à un collecteur de sortie d'huile, un des collecteurs faisant le tour de la circonférence interne tandis que l'autre collecteur fait le tour de la circonférence externe, un flux d'huile sortant de l'élément d'entrée circulant majoritairement dans l'espacement entre une bobine associée et au moins une des deux bobines adjacentes à la bobine associée puis sortant par l'élément de sortie.

Dans ce document, de l'huile pénètre dans le stator par au moins une entrée d'alimentation et fait le tour des bobines en passant, le cas échéant entre deux bobines adjacentes. Par contre, pour des bobines éloignées de ladite au moins une entrée d'alimentation, c'est de l'huile ayant déjà échangé de la chaleur avec les bobines situées à l'entrée qui effectue le refroidissement des bobines éloignées, ce qui empêche un refroidissement homogène de toutes les bobines.

De plus, les éléments d'entrée et de sortie ne sont pas à l'extérieur du compartiment comprenant les bobines mais intégrés à ce compartiment, ce qui ne permet d'obtenir une même température d'huile de refroidissement pour toutes les bobines, les bobines proches d'une entrée d'injection remplissant l'élément d'entrée étant refroidies plus efficacement par de l'huile plus froide que les autres bobines parcourues par de l'huile s'étant échauffée au contact de la tête ou du pied des bobines plus proches d'une entrée d'injection, avantageusement de la tête.

Le document EP-A-3 764 526 est un document interférent c'est-à-dire bénéficiant d'une date antérieure à la date de dépôt de la présente demande de brevet mais non publié à cette date de dépôt.

Ce document décrit un stator équipé de bobines et des collecteurs d'entrée et de sortie mais ne décrit aucun moyen permettant d'assurer un refroidissement uniforme pour toutes les bobines avec un écoulement d'huile spécifiquement dirigé du collecteur vers chaque bobine prise individuellement.

Le problème à la base de la présente invention est d'améliorer le refroidissement des bobines d'un stator d'un moteur ou d'une génératrice électromagnétique par un fluide caloporteur sous forme d'huile en ayant les pertes de charge les plus faibles possibles pour éviter d'avoir des surpressions d'huile dans les chambres de refroidissement vis-à-vis de l'entrefer entre stator et rotor.

A cet effet la présente invention concerne un stator de moteur électrique équipé de bobines et comportant un système de refroidissement des bobines par huile en tant que fluide caloporteur, les bobines étant disposées les unes à côté des autres en laissant un espacement entre deux bobines adjacentes et en délimitant ensemble des circonférences interne et externe dans le stator, le système de refroidissement comprenant un collecteur d'entrée et un collecteur de sortie d'huile, le collecteur d'entrée étant percé d'orifices d'entrée pour envoyer de l'huile sur les bobines et le collecteur de sortie étant percé d'orifices de sortie pour récupérer l'huile, caractérisé en ce que chaque bobine est associée à au moins un orifice d'entrée, un des collecteurs faisant le tour de la circonférence interne tandis que l'autre collecteur fait le tour de la circonférence externe, un flux d'huile sortant de chaque orifice d'entrée circulant majoritairement dans les espacements entre sa bobine associée et au moins une des deux bobines adjacentes à la bobine associée puis sortant par un des orifices de sortie, chaque bobine étant associée à au moins un orifice d'entrée, le flux d'huile débouchant d'un orifice d'entrée circulant majoritairement dans les espacements entre sa bobine associée et chacune des deux bobines adjacentes à la bobine associée puis sortant par un des orifices de sortie, le flux d'huile de chaque orifice d'entrée se divisant en deux écoulements avec un écoulement pour chaque espacement.

En associant au moins un orifice d'entrée d'huile à chaque bobine, il est obtenu un refroidissement homogène des bobines les unes par rapport aux autres, chaque bobine étant refroidie par une huile à la même température car provenant directement du collecteur d'entrée et sans avoir été réchauffée précédemment par d'autres bobines.

L'idée majeure à la base de la présente invention est de créer un nombre de canaux d'injection que forment les espacements entre bobines adjacentes identiques aux nombres de bobines et avantageusement de dents statoriques portant chacune une bobine créant ainsi des circulations d'huile entourant complètement chaque bobine. Les nombreuses circulations d'huile à travers les espacements se font donc en parallèle et non en série et quasiment simultanément.

Ceci a l'avantage de créer des résistances à l'écoulement beaucoup plus faibles, et donc, des surpressions plus faibles nécessaires pour faire circuler l'huile entre les têtes de bobine.

Majoritairement signifie que l'huile injectée circule essentiellement par les espacements entre bobines, étant donné que les quantités d'huile passant d'une bobine à l'autre sur les surfaces des bobines formant respectivement les circonférences interne et externe sont peu importantes voire négligeables, en correspondant à moins de 20% de l'huile qui circulent dans les espacements. Selon l'invention, il peut y avoir plusieurs orifices d'entrée dédiés à une bobine bien que cela ne soit pas préféré mais il y a toujours au moins un orifice d'entrée d'huile associé à une bobine.

Le fait que le flux d'huile de chaque orifice d'entrée se divise en deux écoulements avec un écoulement pour chaque espacement permet que les deux côtés de chaque bobine bordant chacun un espacement avec une bobine adjacente soient ainsi refroidis simultanément dans cette forme de réalisation. Il est avantageux que les deux côtés soient parcourus par un même débit pour obtenir un refroidissement uniforme des deux côtés de la bobine.

Avantageusement, ledit au moins un orifice d'entrée associé à une bobine se trouve à égale distance des deux espacements entre la bobine associée et chacune des deux bobines adjacentes, les deux écoulements présentant un même débit.

Avantageusement, au moins un orifice de sortie est associé à chaque bobine, les orifices d'entrée et de sortie étant appairés en étant en nombres égaux.

Dans ce mode préférentiel, après passage dans un espacement entre deux bobines, l'huile réchauffée est récupérée et évacuée individuellement pour chaque bobine. Ceci permet d'éviter des pertes de charge dans le circuit de refroidissement et facilite l'évacuation de l'huile. Il y a ainsi un débit similaire d'huile en entrée comme en sortie des bobines pour un bon écoulement de l'huile dans le stator et hors du stator.

Avantageusement, les bobines présentent une section trapézoïdale avec une petite base et une grande base ou une section triangulaire avec une base opposée à un sommet, les grandes bases des bobines de section trapézoïdale ou les bases des bobines de section triangulaire délimitant la circonférence externe et les petites bases des bobines de section trapézoïdale ou les sommets des bobines de section triangulaire délimitant la circonférence interne. Les grandes bases forment la largeur la plus grande d'une bobine ou tête de bobine tandis que les petites bases pour une section trapézoïdale ou les sommets opposés à la base pour une section triangulaire forment la largeur la plus petite ou pied de bobine.

De l'huile en tant que fluide caloporteur est injectée sur chaque bobine du côté où sa largeur est la plus grande, directement sur cette grande largeur qui a besoin d'être plus refroidie que sa petite largeur. Il s'ensuit un refroidissement plus efficace de chaque bobine. Avantageusement, les orifices d'entrée sont positionnés en aplomb de la circonférence externe et les orifices de sortie sont positionnés en aplomb de la circonférence interne.

Ceci permet de rapprocher les orifices d'entrée du collecteur d'entrée des têtes de bobine et les orifices de sortie du collecteur de sortie des pieds de bobine pour faciliter l'injection de l'huile sur chaque bobine ainsi que sa récupération en sortie de bobine. Avantageusement, les collecteurs d'entrée et de sortie sont circulaires en présentant un diamètre correspondant respectivement à la circonférence externe et à la circonférence interne.

Ceci permet à la circulation de l'huile dans les collecteurs de suivre l'arrangement des bobines et de refroidir de manière uniforme les bobines les unes par rapport aux autres.

Avantageusement, les collecteurs d'entrée et de sortie sont chacun sous la forme d'un canal comportant respectivement une arrivée ou une sortie d'huile.

Devant alimenter les bobines par plusieurs orifices d'entrée dont au moins un est respectivement dédié à une bobine, il est nécessaire de prévoir une grande quantité d'huile qui est notoirement supérieure à la quantité d'huile quittant le collecteur d'entrée par chaque orifice.

Il s'ensuit que le canal d'entrée doit être d'une section suffisante pour permettre l'acheminement d'une quantité d'huile suffisante pour toutes les bobines de sorte que toutes les bobines soient refroidies simultanément et de manière uniforme. La section du canal est avantageusement en relation avec le nombre d'orifices d'entrée et leur section.

Avantageusement, le stator comporte au moins une sonde de température.

Ceci permet de contrôler le refroidissement des bobines dans le stator. Il est avantageux de prévoir plusieurs sondes de température dans le stator, ceci de préférence à proximité des bobines.

Avantageusement, les bobines sont concentriques en étant chacune supportée par une dent respective. De telles bobines concentriques présentent l'avantage d'être aisées de fabrication.

L'invention concerne aussi un moteur ou une génératrice électromagnétique comportant un carter entourant au moins un rotor et au moins un stator, caractérisé en ce que ledit au moins un stator est tel que décrit précédemment, le carter étant traversé par une buse d'entrée d'huile et une buse de sortie d'huile raccordées respectivement au collecteur d'entrée ou au collecteur de sortie et une paroi étanche séparant ledit au moins un stator dudit au moins un rotor.

Le carter du moteur ou de la génératrice est simplifié du fait qu'il n'est nécessaire que de prévoir une buse d'entrée et une buse de sortie alors que l'état de la technique pouvait prévoir plusieurs buses d'entrée et plusieurs buses de sortie. La paroi étanche sert à protéger le ou les rotors de l'écoulement d'huile provenant du ou des stators.

Avantageusement, ledit au moins un rotor comporte une pluralité de pôles d'aimant, chaque pôle d'aimant étant constitué d'une pluralité d'aimants unitaires solidarisés les uns aux autres par de la colle, de la résine ou du composite avec interposition ou non d'un maillage recevant les aimants unitaires.

Avantageusement, chaque pôle d'aimant est enrobé individuellement dans une couche de composite.

Ces caractéristiques concourent à délivrer les avantages préférentiels principaux de la présente invention. Il est proposé de remplacer un ou plusieurs aimants de taille importante par une pluralité de petits aimants. Il y a donc une création de flux magnétique par une multitude de petits aimants dont le nombre peut être d'au moins 20 et peut même dépasser 100 par pôle aimant.

Un rotor de l'état de la technique pouvait comprendre de 1 à 10 aimants formant pôles d'aimant alors que la présente invention prévoit beaucoup plus d'aimants de petite taille dans chaque pôle d'aimant.

Il convient de ne pas confondre un pôle d'aimant, un rotor pouvant en porter par exemple de cinq à dix voire plus, avec les aimants unitaires qui sont nettement plus nombreux, un rotor pouvant en porter par exemple plusieurs centaines.

Ceci permet d'obtenir un rotor qui, entre autres avantages, peut tourner à grande vitesse et qui ne comprend pas de fer, ce qui limite les pertes rotoriques. Il a été en effet découvert qu'une pluralité d'aimants unitaires donne une structure d'aimant plus résistante au niveau de la flexion globale du rotor tout en produisant très peu de chaleur du fait des faibles pertes générées, la chaleur dissipée par les aimants unitaires étant moindre que la chaleur dissipée par un aimant plus grand d'un seul tenant leur correspondant.

La structure d'aimant formant pôle d'aimant peut comporter une couche de composite non conductrice enrobant les aimants unitaires avantageusement placés dans un maillage. De plus, sa résistance mécanique peut être élevée et l'enrobage peut se faire aisément notamment par injection du composite sur une disposition d'aimants unitaires maintenus en place les uns par rapport aux autres par un moyen quelconque.

Avec un tel rotor, il est avantageux d'associer un ou plusieurs stators comprenant des dents, avantageusement en fer, avec des bobines concentriques, ce qui est facile à réaliser.

De ce fait, la présente invention accomplit la démarche inverse de la démarche suivie par beaucoup de fabricants de moteurs et de génératrices électromagnétiques. Il était connu de faire porter l'effort d'innovation sur les stators en concevant des bobines de plus en plus complexes et difficiles à concevoir.

Au contraire, la démarche inventive de la présente invention s'est portée aussi sur un rotor ne contenant pas de fer et enrobé par du composite en contenant des pôles d'aimant constitués chacun d'une pluralité d'aimants. Ceci a permis d'utiliser des bobines concentriques pour le ou les stators, alors qu'une telle bobine concentrique ne donnait pas toute satisfaction avec des aimants permanents d'un seul tenant comme l'employait l'état de la technique. Il s'est avéré que l'utilisation d'une telle association d'un rotor composite avec au moins un stator en fer comportant des dents ou plots en fer et des bobines concentriques pour le stator procurait une synergie en ce qui concerne la puissance du moteur ou de la génératrice utilisée ainsi qu'une facilité de fabrication et une résistance mécanique élevée du moteur ou la génératrice. La contribution inventive principale de la présente invention à l'état de la technique a aussi été de rendre cette synergie encore plus importante en annihilant le principal désavantage d'un tel stator qui est un fort dégagement de chaleur lors du fonctionnement des bobines. Ceci a été résolu par l'intégration d'un système de refroidissement dans un stator tel que précédemment mentionné.

Un tel moteur peut être un moteur à flux axial.

Les dessins annexés illustrent l'invention :
[Fig 1] représente une vue de face d'un stator selon une forme de réalisation de la présente invention après éloignement d'une plaque d'étanchéité devant séparer le stator du rotor associé pour former un moteur ou une génératrice électromagnétique,
[Fig 2] représente une vue agrandie de trois bobines d'un stator selon une forme de réalisation de la présente invention, les parcours de l'huile entre deux bobines adjacentes étant identifié par des flèches à cette figure, le flux d'huile sortant d'un orifice d'entrée passant des deux côtés latéraux de la bobine associée,
[Fig 3] représente une vue de derrière d'un stator selon une forme de réalisation de la présente invention avec visualisation des collecteurs d'entrée et de sortie d'huile et matérialisation du parcours de l'huile dans les collecteurs par des flèches,
[Fig 4] représente une coupe axiale d'un stator selon une forme de réalisation de la présente invention avec aperçu de l'échange d'huile entre les collecteurs d'entrée et de sortie respectivement avec un orifice d'entrée ou un orifice de sortie,
[Fig 5] représente une vue de face d'un rotor pouvant être associé à un stator comme montré aux figures 1 à 4 afin de former un moteur ou une génératrice électromagnétique conformément à la présente invention.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

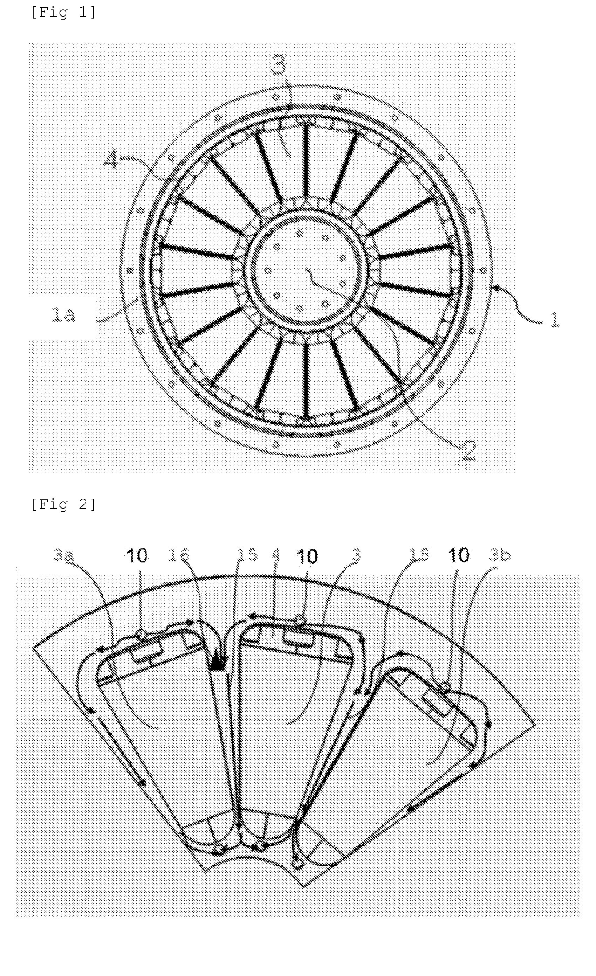

En se référant plus particulièrement à la figure 1, cette figure montre un stator 1 de moteur ou d'une génératrice électromagnétique pouvant comprendre un ou plusieurs stators et un ou plusieurs rotors. Cette figure 1 est une vue de la face du stator 1 tournée vers le rotor donc limitant un entrefer entre le stator 1 et le rotor. Comme il peut être vu à cette figure, le stator 1 de moteur électrique, selon une forme de réalisation non limitative de la présente invention, est de forme circulaire pour un moteur à flux axial, ce qui n'est pas limitatif dans le cadre de la présente invention. La référence 2 indique le centre du stator 1 ou du carter 1a enveloppant le stator 1.

Le stator 1 est équipé de bobines 3 disposées circonférentiellement autour du centre du stator 1 avantageusement montées chacune sur une dent 4. Seule une bobine 3 est référencée à cette figure mais ce qui est énoncé pour cette bobine est applicable aux autres bobines. Les bobines 3, 3a, 3b, aux figures 1 et 2, sont disposées les unes à côté des autres en laissant un espacement 15 entre deux bobines adjacentes et en délimitant ensemble des circonférences interne et externe dans le stator 1. En se référant plus particulièrement aux figures 1 à 3, le stator 1 comporte un système de refroidissement des bobines 3, 3a, 3b par huile en tant que fluide caloporteur. Ce système de refroidissement comprend un collecteur d'entrée 8 et un collecteur de sortie 9 d'huile.

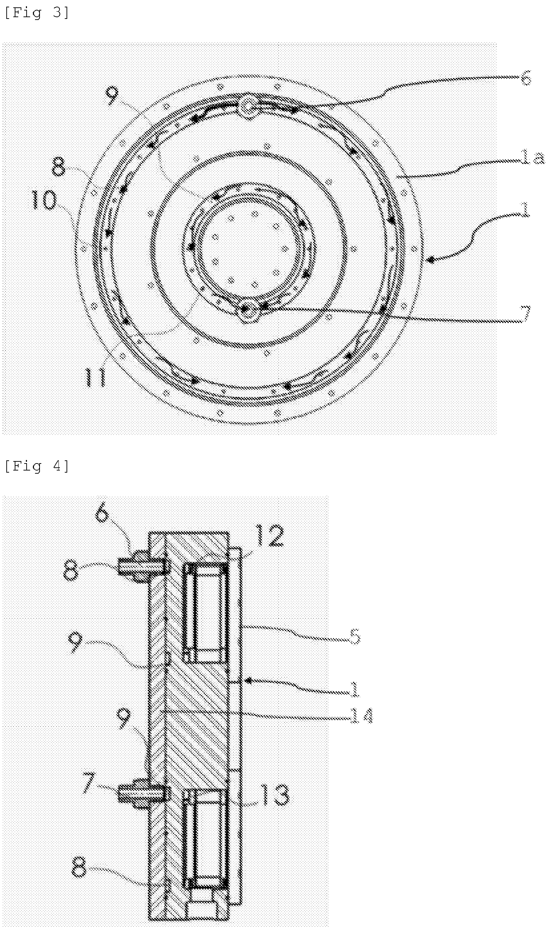

Le collecteur d'entrée 8 est percé d'orifices d'entrée 10 pour envoyer de l'huile sur les bobines 3, 3a, 3b et le collecteur de sortie 9 est percé d'orifices de sortie 11 pour récupérer l'huile, un seul orifice d'entrée 10 et un seul orifice de sortie 11 étant référencés à la figure 3. En se référant plus particulièrement aux figures 2 et 3 prises toujours en combinaison avec les autres figures, chaque bobine 3, 3a, 3b est associée à au moins un orifice d'entrée 10, c'est-à-dire qu'il peut y avoir un orifice d'entrée 10 pour une bobine 3, 3a, 3b mais aussi plusieurs orifices d'entrée 10 pour une même bobine.

A la figure 2, chaque orifice d'entrée 10 est placé dans la partie médiane d'une tête de bobine 3, 3a, 3b qui est la base la plus large d'une bobine 3, 3a, 3b, mais ceci n'est pas obligatoire.

Dans ce cas, le flux d'huile débouchant d'un orifice d'entrée 10 circule majoritairement dans l'espacement 15 entre sa bobine 3 associée et chacune des deux bobines 3a, 3b adjacentes à la bobine 3 associée, comme il est illustré par les flèches à la figure 2.

Toujours dans ce cas, chaque écoulement en provenance d'un écoulement principal d'un orifice d'entrée 10 s'étant séparée en deux se mélange avec un écoulement en provenance d'une bobine 3a, 3b adjacente lui aussi résultant de la séparation d'un écoulement principal issu d'un orifice d'entrée 10 associé à la bobine 3a, 3b adjacente.

Il s'ensuit que le flux d'huile de chaque orifice d'entrée 10 se divise en deux écoulements avec un écoulement pour chaque espacement 15 séparant une bobine 3 de bobines 3a, 3b adjacentes. Les deux côtés de chaque bobine 3, 3a, 3b bordant chacun un espacement 15 avec une bobine adjacente sont ainsi refroidis simultanément.

En superposant les figures 1 et 3, un des collecteurs, à la figure 3 le collecteur de sortie 9, fait le tour de la circonférence interne tandis que l'autre collecteur, à la figure 3 le collecteur d'entrée 8, fait le tour de la circonférence externe.

Un flux d'huile, matérialisé par des flèches, sort de chaque orifice d'entrée 10 puis circule majoritairement dans l'espacement 15 entre sa bobine 3 associée et au moins une des deux bobines 3a, 3b adjacentes à la bobine 3 associée. Ensuite ce flux d'huile est récupéré dans le collecteur de sortie 9 puis sort par un des orifices de sortie 11.

Il est cependant possible qu'il n'y ait qu'un seul orifice de sortie pour toutes les bobines mais ceci n'est pas préféré.

Il peut y avoir un nombre différent d'orifices de sortie 11 et d'orifices d'entrée 10. Par exemple, bien que cela soit préférentiel, il est possible de ne pas associer un orifice de sortie 11 à chaque bobine.

Dans le cas non limitatif de plusieurs orifices d'entrée 10 par bobine 3, 3a, 3b, un de ces orifices d'entrée 10 peut être fermé dans certaines conditions de fonctionnement du stator 1 pour lesquelles un refroidissement accéléré n'est pas requis.

L'ouverture d'un tel orifice d'entrée 10, avantageusement muni d'un clapet, peut se faire par augmentation d'une pression d'huile dans le collecteur d'entrée 8. Ceci permet de réguler le refroidissement au plus près des conditions réelles de fonctionnement du stator 1 et de l'échauffement des bobines 3, 3a, 3b.

Comme illustré à la figure 2, quand le flux d'huile de chaque orifice d'entrée 10 se divise en deux écoulements avec un écoulement pour chaque espacement 15, pour obtenir un refroidissement uniforme des deux côtés de la bobine 3, 3a, 3b, il est avantageux que les deux côtés soient parcourus par un même débit.

De ce fait, l'orifice d'entrée 10 associé à une bobine 3, 3a, 3b peut se trouver à égale distance des deux espacements 15 entre la bobine 3 associée et chacune des deux bobines 3a, 3b adjacentes, les deux écoulements présentant un même débit.

De manière préférentielle mais non limitative, au moins un orifice de sortie 11 est associé à chaque bobine 3, 3a, 3b, les orifices d'entrée 10 et de sortie 11 étant appairés en étant en nombres égaux, notamment dans le cas où chaque bobine 3, 3a, 3b n'est associée qu'avec un seul orifice d'entrée 10 et un seul orifice de sortie 11.

De manière non limitative, il peut y avoir 18 bobines 3, 3a, 3b placées circonférentiellement sur le stator 1 avec 18 orifices d'entrée 10 et 18 orifices de sortie 11.

Ainsi, l'huile arrive directement du collecteur d'entrée 8 sur chaque bobine 3, 3a, 3b et quitte le plus rapidement possible le circuit magnétique une fois avoir refroidi sa bobine 3 associée pour être récupérée dans le collecteur de sortie 9.

En se référant notamment à la figure 2, les bobines 3, 3a, 3b peuvent présenter une section trapézoïdale avec une petite base et une grande base, la petite base étant montrée arrondie à cette figure 2.

En alternative, bien que non montré aux figures, les bobines peuvent présenter une section triangulaire avec une base opposée à un sommet correspondant à une petite base réduite sensiblement à un point.

Dans ces deux cas, les grandes bases des bobines 3, 3a, 3b de section trapézoïdale ou les bases des bobines de section triangulaire peuvent délimiter la circonférence externe précédemment mentionnée.

Les petites bases des bobines 3, 3a, 3b de section trapézoïdale ou les sommets des bobines de section triangulaire peuvent délimiter alors la circonférence interne.

Comme il peut être visible en superposant les figures 1 et 3 rapportées à la même échelle, les orifices d'entrée 10 peuvent être positionnés en aplomb de la circonférence externe et les orifices de sortie 11 peuvent être positionnés en aplomb de la circonférence interne.

Les collecteurs d'entrée 8 et de sortie 9 peuvent être circulaires en présentant un diamètre correspondant respectivement à la circonférence externe et à la circonférence interne délimitées par les bobines 3, 3a, 3b.

Ainsi, dans le cas d'un collecteur d'entrée 8 s'étendant à l'extérieur d'un collecteur de sortie 9, ce sont les grandes bases des bobines 3, 3a, 3b de section trapézoïdale ou les bases des bobines de section triangulaire qui sont refroidies en premier par de l'huile directement en sortie du collecteur d'entrée 8 et n'ayant pas encore échangé de chaleur avec la bobine concernée ou une autre bobine. Comme les collecteurs doivent transporter suffisamment d'huile pour toutes les bobines 3, 3a, 3b et comme les débits d'huile peuvent varier, les collecteurs d'entrée 8 et de sortie 9 peuvent être chacun sous la forme d'un canal comportant respectivement une arrivée ou une sortie d'huile.

Il peut être établi un rapport entre, d'une part, la section du canal formant le collecteur d'entrée 8 et, d'autre part, la section d'un orifice d'entrée 10 de manière à obtenir un rapport refroidissement/température optimal et uniforme pour toutes les bobines. Ce rapport dépend du type de moteur, par exemple de sa taille, de sa géométrie, du nombre de dents et du type de bobine.

Dans le mode de réalisation préférentielle, les bobines 3, 3a, 3b peuvent être concentriques en étant chacune supportée par une dent 4 respective, comme il est notablement visible à la figure 2, la dent de la bobine centrale 3 étant référencée.

Pour contrôler la température dans le stator 1 avantageusement à plusieurs endroits différents à proximité des bobines 3, 3a, 3b, le stator 1 peut comporter au moins une sonde 16 de température.

En se référant notamment aux figures 2 à 4, l'injection de l'huile se fait par une buse d'entrée 6 dans le collecteur d'entrée 8, avantageusement axisymétrique et qui alimente tous les orifices d'entrée 10 pour l'alimentation de la cavité du circuit magnétique comprenant les bobines 3, 3a, 3b, avantageusement chacune supportée par une dent. L'huile remonte jusqu'à une paroi étanche 5, séparant le stator 1 d'un rotor non montré à ces trois figures et passe entre les bobines 3, 3a, 3b pour arriver dans les orifices de sortie 11 avantageusement en nombre identique au nombre de dents et, au nombre d'orifices d'entrée 10, et être évacuée par le collecteur de sortie 11 puis par la buse de sortie 7.

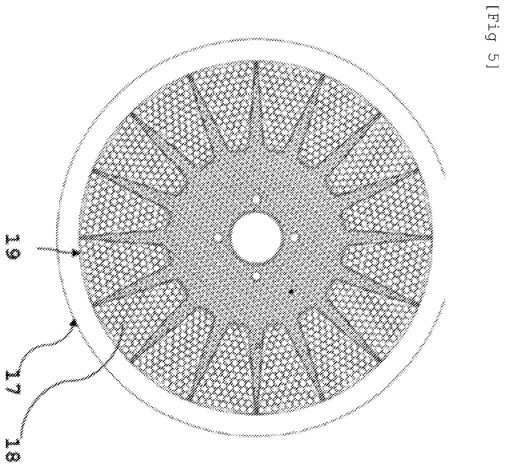

La référence 14 indique la plaque extérieure destinée à être opposée à un rotor, non montré à ces figures mais référencé 17 à la figure 5 et les références 12 et 13 indiquent respectivement les cavités sous les têtes de bobines en face du collecteur d'entrée 8 d'huile et sous les pieds de bobines en face du collecteur de sortie 9 d'huile.

En se référant notamment à la figure 3 montrant le stator 1 et à la figure 5 montrant un rotor 17, l'invention concerne aussi un moteur ou une génératrice électromagnétique.

Le moteur ou la génératrice comporte un carter 1a entourant au moins un rotor 17 et au moins un stator 1. Le ou les stators 1 sont tels que décrit précédemment en incorporant un système de refroidissement.

Le carter 1a est traversé par la buse d'entrée 6 d'huile et la buse de sortie 7 d'huile raccordées respectivement au collecteur d'entrée 8 ou au collecteur de sortie 9 et une paroi étanche 5, visible notamment à la figure 4, sépare ledit au moins un stator 1 dudit au moins un rotor 17.

Comme il est visible à la figure 5, le ou chaque rotor 17 peut comporter une pluralité de pôles d'aimant 19, dont un seul est référencé à la figure 5.

Le ou chaque rotor 17 peut être en composite pour diminuer les pertes en fer. Chaque pôle d'aimant 19 peut être constitué d'une pluralité d'aimants unitaires 18 solidarisés les uns aux autres par de la colle ou de la résine, avec interposition ou non d'un maillage recevant les aimants unitaires 18.

A la figure 5 seul un aimant unitaire est référencé 18 et seul un pôle d'aimant est référencé 19 mais ce qui est énoncé respectivement pour l'aimant unitaire 18 et le pôle d'aimant 19 est valide pour tous les aimants unitaires et les pôles d'aimant.

De plus, pour renforcer la solidité du pôle d'aimant 19, chaque pôle d'aimant 19 peut être enrobé individuellement dans une couche de composite.

Au regard des figures, il a été décrit précédemment essentiellement un moteur à flux axial mais la présente invention peut s'appliquer à tout type de moteur, notamment un moteur ou une génératrice à flux radial ou à flux mixte.

## Revendications

1. Stator (1) de moteur électrique équipé de bobines (3, 3a, 3b) et comportant un système de refroidissement des bobines (3, 3a, 3b) par huile en tant que fluide caloporteur, les bobines (3, 3a, 3b) étant disposées les unes à côté des autres en laissant un espacement (15) entre deux bobines (3a, 3b) adjacentes et en délimitant ensemble des circonférences interne et externe dans le stator (1), le système de refroidissement comprenant un collecteur d'entrée (8) et un collecteur de sortie (9) d'huile, un des collecteurs faisant le tour de la circonférence interne tandis que l'autre collecteur fait le tour de la circonférence externe, un flux d'huile sortant du collecteur d'entrée (8) circulant majoritairement dans les espacements (15) entre une bobine (3) associée et au moins une des deux bobines (3a, b) adjacentes à la bobine (3) associée puis sortant par le collecteur de sortie (9), **caractérisé en ce que** le collecteur d'entrée (8) est percé d'orifices d'entrée (10) pour envoyer de l'huile sur les bobines (3, 3a, 3b) et le collecteur de sortie (9) est percé d'orifices de sortie (11) pour récupérer l'huile, chaque bobine (3, 3a, 3b) étant associée à au moins un orifice d'entrée (10), le flux d'huile débouchant d'un orifice d'entrée (10) circulant majoritairement dans les espacements (15) entre sa bobine (3) associée et chacune des deux bobines (3a, 3b) adjacentes à la bobine (3) associée puis sortant par un des orifices de sortie (11), le flux d'huile de chaque orifice d'entrée (10) se divisant en deux écoulements avec un écoulement pour chaque espacement (15).

2. Stator (1) selon la revendication précédente, dans lequel ledit au moins un orifice d'entrée (10) associé à une bobine (3, 3a, 3b) se trouve à égale distance des deux espacements (15) entre la bobine (3) associée et chacune des deux bobines (3a, 3b) adjacentes, les deux écoulements présentant un même débit.

3. Stator (1) selon l'une quelconque des deux revendications précédentes, dans lequel au moins un orifice de sortie (11) est associé à chaque bobine (3, 3a, 3b), les orifices d'entrée (10) et de sortie (11) étant appairés en étant en nombres égaux.

4. Stator (1) selon l'une quelconque des revendications précédentes, dans lequel les bobines (3, 3a, 3b) présentent une section trapézoïdale avec une petite base et une grande base ou une section triangulaire avec une base opposée à un sommet, les grandes bases des bobines (3, 3a, 3b) de section trapézoïdale ou les bases des bobines (3, 3a, 3b) de section triangulaire délimitant la circonférence externe et les petites bases des bobines (3, 3a, 3b) de section trapézoïdale ou les sommets des bobines (3, 3a, 3b) de section triangulaire délimitant la circonférence interne.

5. Stator (1) selon l'une quelconque des revendications précédentes, dans lequel les orifices d'entrée (10) sont positionnés en aplomb de la circonférence externe et les orifices de sortie (11) sont positionnés en aplomb de la circonférence interne.

6. Stator (1) selon la revendication précédente, dans lequel les collecteurs d'entrée (8) et de sortie (9) sont circulaires en présentant un diamètre correspondant respectivement à la circonférence externe et à la circonférence interne.

7. Stator (1) selon l'une quelconque des deux revendications précédentes, dans lequel les collecteurs d'entrée (8) et de sortie (9) sont chacun sous la forme d'un canal comportant respectivement une arrivée ou une sortie d'huile.

8. Stator (1) selon l'une quelconque des revendications précédentes, lequel comporte au moins une sonde (16) de température.

9. Stator (1) selon l'une quelconque des revendications précédentes, dans lequel les bobines (3, 3a, 3b) sont concentriques en étant chacune supportée par une dent (4) respective.

10. Moteur ou génératrice électromagnétique comportant un carter (1a) entourant au moins un rotor (17) et au moins un stator (1) **caractérisé en ce que** ledit au moins un stator (1) est selon l'une quelconque des revendications précédentes, le carter (1a) étant traversé par une buse d'entrée (6) d'huile et une buse de sortie (7) d'huile raccordées respectivement au collecteur d'entrée (8) ou au collecteur de sortie (9) et une paroi étanche (5) séparant ledit au moins un stator (1) dudit au moins un rotor (17).

11. Moteur ou génératrice selon la revendication précédente, dans lequel ledit au moins un rotor (17) comporte une pluralité de pôles d'aimant (19), ledit au moins un rotor (17) étant en composite.

12. Moteur ou génératrice selon l'une quelconque des deux revendications précédentes, dans lequel chaque pôle d'aimant (19) est constitué d'une pluralité d'aimants unitaires (18) solidarisés les uns aux autres, par de la colle, de la résine ou du composite avec interposition ou non d'un maillage recevant les aimants unitaires (18).

13. Moteur ou génératrice selon la revendication précédente, dans lequel chaque pôle d'aimant (19) est enrobé individuellement dans une couche de composite.

## Patentansprüche

1. Stator (1) eines Elektromotors, der mit Spulen (3, 3a, 3b) ausgestattet ist und ein System zur Kühlung der Spulen (3, 3a, 3b) durch Öl als Wärmeträgerfluid umfasst, wobei die Spulen (3, 3a, 3b) nebeneinander angeordnet sind, so dass ein Zwischenraum (15) zwischen zwei benachbarten Spulen (3a, 3b) verbleibt, und gemeinsam einen inneren Umfang und einen äußeren Umfang im Stator (1) begrenzen, wobei das Kühlsystem einen Öl-Eintrittssammler (8) und einen Öl-Austrittssammler (9) umfasst, wobei einer der Sammler um den inneren Umfang herumläuft, während der andere Sammler um den äußeren Umfang herumläuft, wobei ein aus dem Eintrittssammler (8) austretender Ölstrom überwiegend in den Zwischenräumen (15) zwischen einer zugeordneten Spule (3) und mindestens einer der beiden zu der zugeordneten Spule (3) benachbarten Spulen (3a, b) zirkuliert und anschließend über den Austrittssammler (9) austritt, **dadurch gekennzeichnet, dass** der Eintrittssammler (8) mit Eintrittsöffnungen (10) versehen ist, um Öl auf die Spulen (3, 3a, 3b) zu leiten, und der Austrittssammler (9) mit Austrittsöffnungen (11) versehen ist, um das Öl aufzufangen, wobei jeder Spule (3, 3a, 3b) mindestens eine Eintrittsöffnung (10) zugeordnet ist, wobei der aus einer Eintrittsöffnung (10) austretende Ölstrom überwiegend in den Zwischenräumen (15) zwischen seiner zugeordneten Spule (3) und jeder der beiden zu der zugeordneten Spule (3) benachbarten Spulen (3a, 3b) zirkuliert und anschließend über eine der Austrittsöffnungen (11) austritt, wobei sich der Ölstrom jeder Eintrittsöffnung (10) in zwei Strömungen aufteilt, mit einer Strömung für jeden Zwischenraum (15).

2. Stator (1) nach dem vorhergehenden Anspruch, bei dem sich die mindestens eine einer Spule (3, 3a, 3b) zugeordnete Eintrittsöffnung (10) in gleichem Abstand von den beiden Zwischenräumen (15) zwischen der zugeordneten Spule (3) und jeder der beiden benachbarten Spulen (3a, 3b) befindet, wobei die beiden Strömungen denselben Durchsatz aufweisen.

3. Stator (1) nach einem der beiden vorhergehenden Ansprüche, bei dem jeder Spule (3, 3a, 3b) mindestens eine Austrittsöffnung (11) zugeordnet ist, wobei die Eintrittsöffnungen (10) und die Austrittsöffnungen (11) einander paarweise zugeordnet sind, indem sie in gleicher Anzahl vorliegen.

4. Stator (1) nach einem der vorhergehenden Ansprüche, bei dem die Spulen (3, 3a, 3b) einen trapezförmigen Querschnitt mit einer kleinen Grundseite und einer großen Grundseite oder einen dreieckigen Querschnitt mit einer einer Spitze gegenüberliegenden Grundseite aufweisen, wobei die großen Grundseiten der Spulen (3, 3a, 3b) mit trapezförmigem Querschnitt oder die Grundseiten der Spulen (3, 3a, 3b) mit dreieckigem Querschnitt den äußeren Umfang begrenzen und die kleinen Grundseiten der Spulen (3, 3a, 3b) mit trapezförmigem Querschnitt oder die Spitzen der Spulen (3, 3a, 3b) mit dreieckigem Querschnitt den inneren Umfang begrenzen.

5. Stator (1) nach einem der vorhergehenden Ansprüche, bei dem die Eintrittsöffnungen (10) lotrecht über dem äußeren Umfang und die Austrittsöffnungen (11) lotrecht über dem inneren Umfang positioniert sind.

6. Stator (1) nach dem vorhergehenden Anspruch, bei dem der Eintrittssammler (8) und der Austrittssammler (9) kreisförmig sind und einen Durchmesser aufweisen, der jeweils dem äußeren Umfang bzw. dem inneren Umfang entspricht.

7. Stator (1) nach einem der beiden vorhergehenden Ansprüche, bei dem der Eintrittssammler (8) und der Austrittssammler (9) jeweils in Form eines Kanals ausgebildet sind, der jeweils einen Ölzulauf bzw. einen Ölablauf aufweist.

8. Stator (1) nach einem der vorhergehenden Ansprüche, welcher mindestens einen Temperaturfühler (16) umfasst.

9. Stator (1) nach einem der vorhergehenden Ansprüche, bei dem die Spulen (3, 3a, 3b) konzentrisch sind und jeweils von einem jeweiligen Zahn (4) getragen werden.

10. Elektromagnetischer Motor oder Generator, umfassend ein Gehäuse (1a), das mindestens einen Rotor (17) und mindestens einen Stator (1) umgibt, **dadurch gekennzeichnet, dass** der mindestens eine Stator (1) nach einem der vorhergehenden Ansprüche ausgebildet ist, wobei das Gehäuse (1a) von einer Öl-Eintrittsdüse (6) und einer Öl-Austrittsdüse (7) durchsetzt ist, die jeweils an den Eintrittssammler (8) bzw. an den Austrittssammler (9) angeschlossen sind, und wobei eine dichte Wand (5) den mindestens einen Stator (1) von dem mindestens einen Rotor (17) trennt.

11. Motor oder Generator nach dem vorhergehenden Anspruch, bei dem der mindestens eine Rotor (17) eine Mehrzahl von Magnetpolen (19) umfasst, wobei der mindestens eine Rotor (17) aus Verbundwerkstoff besteht.

12. Motor oder Generator nach einem der beiden vorhergehenden Ansprüche, bei dem jeder Magnetpol (19) aus einer Mehrzahl von Einzelmagneten (18) besteht, die durch Klebstoff, Harz oder Verbundwerkstoff miteinander verbunden sind, mit oder ohne Zwischenlage eines Gitters, welches die Einzelmagnete (18) aufnimmt.

13. Motor oder Generator nach dem vorhergehenden Anspruch, bei dem jeder Magnetpol (19) einzeln in eine Schicht aus Verbundwerkstoff eingebettet ist.

## Claims

1. Stator (1) of an electric motor equipped with coils (3, 3a, 3b) and comprising a system for cooling the coils (3, 3a, 3b) by oil as heat-transfer fluid, the coils (3, 3a, 3b) being arranged one beside the other so as to leave a spacing (15) between two adjacent coils (3a, 3b) and together delimiting an inner circumference and an outer circumference in the stator (1), the cooling system comprising an oil inlet manifold (8) and an oil outlet manifold (9), one of the manifolds running around the inner circumference while the other manifold runs around the outer circumference, an oil flow leaving the inlet manifold (8) circulating predominantly in the spacings (15) between an associated coil (3) and at least one of the two coils (3a, b) adjacent to the associated coil (3) and then leaving via the outlet manifold (9), **characterized in that** the inlet manifold (8) is pierced with inlet orifices (10) for delivering oil onto the coils (3, 3a, 3b) and the outlet manifold (9) is pierced with outlet orifices (11) for collecting the oil, each coil (3, 3a, 3b) being associated with at least one inlet orifice (10), the oil flow issuing from an inlet orifice (10) circulating predominantly in the spacings (15) between its associated coil (3) and each of the two coils (3a, 3b) adjacent to the associated coil (3) and then leaving via one of the outlet orifices (11), the oil flow of each inlet orifice (10) dividing into two streams, with one stream for each spacing (15).

2. Stator (1) according to the preceding claim, in which said at least one inlet orifice (10) associated with a coil (3, 3a, 3b) is located at an equal distance from the two spacings (15) between the associated coil (3) and each of the two adjacent coils (3a, 3b), the two streams having a same flow rate.

3. Stator (1) according to either of the two preceding claims, in which at least one outlet orifice (11) is associated with each coil (3, 3a, 3b), the inlet orifices (10) and the outlet orifices (11) being paired by being equal in number.

4. Stator (1) according to any one of the preceding claims, in which the coils (3, 3a, 3b) have a trapezoidal cross-section with a small base and a large base, or a triangular cross-section with a base opposite an apex, the large bases of the coils (3, 3a, 3b) of trapezoidal cross-section or the bases of the coils (3, 3a, 3b) of triangular cross-section delimiting the outer circumference, and the small bases of the coils (3, 3a, 3b) of trapezoidal cross-section or the apices of the coils (3, 3a, 3b) of triangular cross-section delimiting the inner circumference.

5. Stator (1) according to any one of the preceding claims, in which the inlet orifices (10) are positioned vertically in line with the outer circumference and the outlet orifices (11) are positioned vertically in line with the inner circumference.

6. Stator (1) according to the preceding claim, in which the inlet manifold (8) and the outlet manifold (9) are circular, having a diameter corresponding respectively to the outer circumference and to the inner circumference.

7. Stator (1) according to either of the two preceding claims, in which the inlet manifold (8) and the outlet manifold (9) are each in the form of a channel comprising respectively an oil inlet or an oil outlet.

8. Stator (1) according to any one of the preceding claims, which comprises at least one temperature probe (16).

9. Stator (1) according to any one of the preceding claims, in which the coils (3, 3a, 3b) are concentric, each being supported by a respective tooth (4).

10. Electromagnetic motor or generator comprising a casing (1a) surrounding at least one rotor (17) and at least one stator (1), **characterized in that** said at least one stator (1) is according to any one of the preceding claims, the casing (1a) being passed through by an oil inlet nozzle (6) and an oil outlet nozzle (7) connected respectively to the inlet manifold (8) or to the outlet manifold (9), and a sealed wall (5) separating said at least one stator (1) from said at least one rotor (17).

11. Motor or generator according to the preceding claim, in which said at least one rotor (17) comprises a plurality of magnet poles (19), said at least one rotor (17) being made of composite.

12. Motor or generator according to either of the two preceding claims, in which each magnet pole (19) consists of a plurality of unitary magnets (18) secured to one another by glue, resin or composite, with or without the interposition of a mesh receiving the unitary magnets (18).

13. Motor or generator according to the preceding claim, in which each magnet pole (19) is individually coated in a layer of composite.
